# FASCICULE DE BREVET EUROPEEN

(11) **EP 3 511 240 B1**
(45) Date de publication et mention de la délivrance du brevet: **12.02.2020**
(21) Numéro de dépôt: 19150891.0
(22) Date de dépôt: 09.01.2019
(51) Int. Cl.: B64C 11/26, B29C 70/48

(54) **AUBE A LONGERON COMPOSITE INTÉGRÉ TISSÉE EN UNE SEULE PIÈCE**
EINTEILIG GEWEBTES PROPELLERBLATT MIT INTEGRIERTEM VERBUNDHOLM
SINGLE PIECE WOVEN BLADE HAVING AN INTEGRATED COMPOSITE SPAR

(30) Priorité: 12.01.2018 FR 1850259
(43) Date de publication de la demande: 17.07.2019
(73) Titulaire: SAFRAN AIRCRAFT ENGINES, 75015 Paris (FR)
(72) Inventeur: COURTIER, Vivien Mickaël, 77550 Moissy-Cramayel (FR)
(74) Mandataire: Cabinet Beau de Loménie

(56) Documents cités:
- WO-A1-2012/001279
- WO-A1-2015/004362
- US-A1- 2013 017 093

## Description

### Arrière-plan de l'invention

La présente invention se rapporte au domaine des aubes ou pales d'hélice pour aéronefs telles que celles présentes sur les turbopropulseurs.

Les aubes ou pales d'hélice pour turbopropulseurs sont généralement réalisées en matériau métallique. Si les aubes ou pales d'hélice en matériau métallique ont une bonne résistance mécanique, elles présentent toutefois l'inconvénient d'avoir une masse relativement importante.

Afin d'obtenir des aubes ou pales d'hélice plus légères, il est connu de réaliser des pales d'hélice en matériau composite, c'est-à-dire en réalisant des pièces de structure à renfort fibreux et matrice résine.

Les documents US 2013/0017093 et WO 2012/001279 décrivent la réalisation d'une pale d'hélice à partir d'une structure fibreuse à profil aérodynamique à l'intérieur de laquelle est introduite une partie d'un longeron, une extrémité du longeron étant prolongée par une portion renflée destinée à former le pied de la pale d'hélice. La structure fibreuse, qui est réalisée en une seule pièce par tissage tridimensionnel, comporte une zone de déliaison permettant de former un logement à l'intérieur de la structure fibreuse dans lequel est insérée une partie du longeron.

La pale d'hélice ainsi obtenue présente à la fois une masse globale allégée et une résistance mécanique importante par la présence en peau d'une structure en matériau composite (renfort fibreux densifié par une matrice).

Cependant, le maintien en position du longeron rapporté dans la structure fibreuse peut être délicat dans certains cas, comme par exemple lorsque la pale est soumise à des charges mécaniques importantes, des impacts ou des chocs.

### Objet et résumé de l'invention

Il est donc souhaitable de pouvoir proposer une solution pour la réalisation d'aubes ou pales d'hélice d'aéronef du type décrit ci-avant mais qui présentent une résistance mécanique accrue en particulier au niveau du maintien en position du longeron à l'intérieur de la structure fibreuse de profil aérodynamique.

A cet effet, selon l'invention, il est proposé une structure fibreuse de renfort d'aube ou pale d'hélice en matériau composite, la structure fibreuse étant tissée en une seule pièce et ayant un profil aérodynamique, une portion de longeron et une portion renflée, le profil aérodynamique s'étendant dans une direction longitudinale entre une extrémité inférieure et une extrémité supérieure et dans une direction transversale entre un bord avant et un bord arrière, la structure fibreuse comportant une zone de déliaison s'étendant entre les bords avant et arrière du profil aérodynamique suivant la direction transversale et entre une zone intermédiaire et le bord inférieur dudit profil suivant la direction longitudinale, la portion de longeron s'étendant à l'intérieur du profil aérodynamique au niveau de la zone de déliaison en retrait des bords avant et arrière dudit profil suivant la direction transversale, la portion de longeron débouchant à l'extérieur du profil aérodynamique au niveau du bord inférieur dudit profil, la portion renflée s'étendant dans le prolongement de la portion de longeron à l'extérieur du profil aérodynamique, la portion renflée s'étendant suivant la direction transversale sur une longueur inférieure à la longueur du bord inférieur du profil aérodynamique, le profil aérodynamique comportant au niveau de la zone de déliaison des première et deuxième peaux déliées l'une par rapport à l'autre, les première et deuxième peaux s'étendant entre les bords avant et arrière du profil aérodynamique suivant la direction transversale et entre la zone intermédiaire et le bord inférieur dudit profil suivant la direction longitudinale, les peaux enserrant la portion de longeron, les première et deuxièmes peaux délimitant à l'intérieur du profil aérodynamique des premier et deuxième logements présents respectivement d'un côté et de l'autre de la portion de longeron suivant la direction transversale, les premier et deuxième logements débouchant au niveau du bord inférieur du profil aérodynamique.

En réalisant ainsi une portion de longeron intégralement formée avec le profil aérodynamique de la structure fibreuse destinée à former le renfort fibreux d'une aube ou d'une pale d'hélice en matériau composite, on assure un parfait maintien en position des parties d'attache (échasse et pied) de l'aube ou pale d'hélice par rapport au profil aérodynamique. En effet, même en cas de sollicitations mécaniques (impacts, chocs) au niveau du profil aérodynamique de l'aube ou pale d'hélice, il n'y a pas de risque de déplacement de la portion de longeron à l'intérieur du renfort car celle-ci est liée au profil aérodynamique par des parties continument tissées du renfort.

Selon un aspect de la structure fibreuse de l'invention, le bord avant et le bord arrière présentent chacun une fente s'étendant suivant la direction longitudinale entre la partie intermédiaire et l'extrémité inférieure de la structure fibreuse. Cela permet notamment d'accéder à l'ébauche de portion de longeron pour la découpe des fils flottés après le tissage de l'ébauche de structure fibreuse et de faciliter la mise en place de pièces de conformation ultérieurement.

L'invention a en outre pour objet un aube ou pale d'hélice comprenant un renfort fibreux constitué d'une structure fibreuse selon l'invention et densifié par une matrice, l'aube ou pale d'hélice comportant un profil aérodynamique, une portion de longeron s'étendant à l'intérieur du profil aérodynamique, une échasse s'étendant à l'extérieur du profil aérodynamique, un pied s'étendant à l'extérieur du profil aérodynamique dans le prolongement de l'échasse, une première pièce de conformation présente dans le premier logement ménagé à l'intérieur du profil aérodynamique et une deuxième pièce de conformation présente dans le deuxième logement ménagé à l'intérieur du profil aérodynamique.

Comme indiqué ci-avant, l'aube ou la pale d'hélice de l'invention présente une très bonne tenue mécanique en particulier au niveau de la liaison entre le pied et le profil aérodynamique grâce au renfort fibreux dans lequel le pied, l'échasse et la portion de longeron forment une seule et même pièce avec le profil aérodynamique.

Selon un premier aspect de l'aube ou pale d'hélice de l'invention, l'échasse reliant le pied à la portion de longeron présente des bords latéraux droits parallèles à la direction longitudinale. On forme ainsi un pied broché raccourci sans introduire de rayons de raccordement entre le pied et le profil aérodynamique, ce qui améliore grandement la tenue mécanique de cette partie de l'aube. En effet, la zone de raccordement entre le pied et le profil aérodynamique est une zone de l'aube ou pale d'hélice très sollicitée mécaniquement car elle concentre les contraintes mécaniques générées par la géométrie de l'aube ou pale d'hélice en mouvement et correspond à une zone de localisation de la criticité vibratoire pouvant conduire à des décohésions entre les fibres et la matrice. En l'absence d'un rayon de raccordement, on améliore donc la résistance mécanique de l'aube ou pale d'hélice tout en conservant une grande compacité au niveau du pied.

Selon un deuxième aspect de l'aube ou pale d'hélice de l'invention, la hauteur de la zone de déliaison présente dans la structure fibreuse constituant le renfort fibreux de l'aube ou pale d'hélice est comprise entre 10% et 50%, plus préférentiellement entre 20% et 40%, de la hauteur totale du profil aérodynamique suivant la direction longitudinale.

L'invention a également pour objet un moteur aéronautique comprenant une pluralité d'aubes ou pales d'hélice selon l'invention.

L'invention concerne aussi un aéronef comprenant au moins un moteur selon l'invention.

La présente invention a encore pour objet un procédé de fabrication d'une structure fibreuse de renfort d'aube ou pale d'hélice en matériau composite comprenant :
- le tissage tridimensionnel entre une pluralité de couches de fils de trame et une pluralité de couches de fils chaîne d'une ébauche de structure fibreuse en une seule pièce, l'ébauche s'étendant dans une direction longitudinale entre une partie inférieure et une partie supérieure et dans une direction transversale entre un bord avant et un bord arrière, l'ébauche comprenant une ébauche de profil aérodynamique, une ébauche de portion de longeron et une ébauche de portion renflée, le procédé comprenant lors du tissage de l'ébauche de structure fibreuse la formation d'une déliaison à l'intérieur de l'ébauche de profil aérodynamique, la déliaison s'étendant entre une zone intermédiaire et le bord inférieur de l'ébauche de structure fibreuse suivant la direction longitudinal et entre les bords avant et arrière de l'ébauche de structure fibreuse suivant la direction transversale, la déliaison séparant des première et deuxième portions présentes de part et d'autre de l'ébauche de portion de longeron de manière à former des première et deuxième ébauches de peaux déliées l'une par rapport à l'autre, les première et deuxième ébauches de peaux s'étendant entre les bords avant et arrière de l'ébauche de structure fibreuse suivant la direction transversale et entre la zone intermédiaire et le bord inférieur de l'ébauche de structure fibreuse suivant la direction longitudinal, les ébauches de peaux enserrant l'ébauche de portion de longeron, les première et deuxième ébauches peaux délimitant à l'intérieur de l'ébauche de structure fibreuse des premier et deuxième logements présents respectivement d'un côté et de l'autre de l'ébauche de portion de longeron suivant la direction transversale, les premier et deuxième logements débouchant au niveau de la partie inférieure de l'ébauche de structure fibreuse,
- la découpe de fils flottés présents à l'extérieur de l'ébauche de structure fibreuse de manière à définir le contour extérieur de la structure fibreuse,
- la découpe de fils flottés présents autour de l'ébauche de portion de longeron et de l'ébauche de portion renflée ainsi que de fils flottés présents au niveau de la partie inférieure de l'ébauche de structure fibreuse de manière à obtenir une structure fibreuse comportant un profil aérodynamique comprenant un bord inférieur à partir duquel une portion renflée s'étend dans le prolongement d'une portion de longeron à l'extérieur du profil aérodynamique, la portion renflée s'étendant suivant la direction transversale sur une longueur inférieure à la longueur du bord inférieur du profil aérodynamique.

L'invention concerne enfin un procédé de fabrication d'une aube ou pale d'hélice en matériau composite comprenant au moins:
- la réalisation d'une structure fibreuse selon l'invention,
- la mise en forme de la structure fibreuse par introduction dans les premier et deuxième logements présents à l'intérieur du profil aérodynamique de la structure fibreuse respectivement d'une première et d'une deuxième pièces de conformation pour obtenir une préforme d'aube ou de pale d'hélice,
- la densification de la préforme par une matrice,
- l'usinage de sur-longueurs présentes sur la préforme densifiée pour obtenir une aube ou pale d'hélice comportant un profil aérodynamique, une portion de longeron s'étendant à l'intérieur du profil aérodynamique, une échasse s'étendant à l'extérieur du profil aérodynamique, un pied s'étendant à l'extérieur du profil aérodynamique dans le prolongement de l'échasse, une première pièce de conformation présente dans le premier logement ménagé à l'intérieur du profil et une deuxième pièce de conformation présente dans le deuxième logement ménagé à l'intérieur du profil aérodynamique.

Selon un premier aspect du procédé de fabrication d'une aube ou pale d'hélice selon l'invention, l'échasse reliant le pied à la portion de longeron présente des bords latéraux droits parallèles à la direction longitudinale.

Selon un deuxième aspect du procédé de fabrication d'une aube ou pale d'hélice selon l'invention, la hauteur de la zone de déliaison présente dans la structure fibreuse constituant le renfort fibreux de l'aube ou pale d'hélice est comprise entre 10% et 50%, plus préférentiellement entre 20% et 40%, de la hauteur totale du profil aérodynamique suivant la direction longitudinale.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique d'une aube conformément à un mode de réalisation de l'invention,
- les figures 2A à 2C sont des vues en coupe transversale de l'aube de la figure 1 selon respectivement les plans de coupe A, B et C représentés sur la figure 1,
- les figures 2D à 2F sont des vues en coupe longitudinale de l'aube de la figure 1 selon respectivement les plans de coupe D, E et F représentés sur la figure 1,
- La figure 3 est une vue schématique illustrant le tissage 3D d'une ébauche de structure fibreuse pour la fabrication de l'aube de la figure 1,
- les figures 4A et 4B sont des vues en coupe longitudinale de l'ébauche de la figure 3 selon respectivement les plans de coupe A et B représentés sur la figure 3,
- la figure 5 est une vue schématique en perspective de l'ébauche de structure fibreuse après découpe des fils flottés extérieurs,
- la figure 6 est une schématique en perspective de l'ébauche de structure fibreuse après découpe des fils flottés présents dans la partie inférieure de l'ébauche,
- la figure 7 est une vue schématique en perspective de l'ébauche de structure fibreuse après découpe des fils flottés présents sur la portion de longeron de l'ébauche,
- la figure 8 est une vue schématique en perspective de la structure fibreuse obtenue ainsi que sa mise en forme avec des pièces de conformation,
- la figure 9 est une vue schématique en perspective de la préforme d'aube densifiée avec une matrice montrant l'usinage final du pied, de l'échasse et de la partie inférieure des peaux.

### Description détaillée de modes de réalisation

L'invention s'applique d'une manière générale à différents types d'aubes ou pales d'hélice utilisées dans des moteurs d'aéronefs. L'invention trouve une application avantageuse mais non exclusive dans des aubes ou pales d'hélice de grandes dimensions qui, en raison de leur taille, présentent une masse importante ayant un impact significatif sur la masse globale du moteur de l'aéronef. L'aube selon l'invention peut notamment constituer une aube pour roues mobiles carénées telles que des aubes de soufflante ou une aube pour roues mobiles non carénées comme dans les moteurs aéronautiques dits « open rotor ».

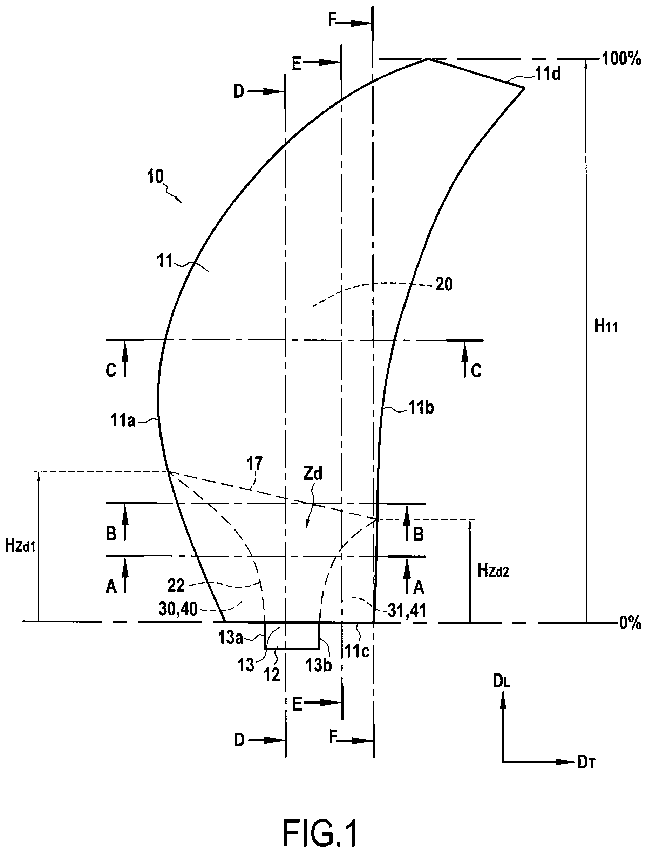

La figure 1 représente une aube 10 destinée à être montée sur un turbopropulseur d'avion qui comprend, un profil aérodynamique 11 destinée à former la parie aérodynamique de la pale, un pied 12 formé par une partie de plus forte épaisseur, par exemple à section en forme de bulbe, prolongé par une échasse 13. La structure à profil aérodynamique 11 présente en section transversale un profil incurvé d'épaisseur variable entre son bord d'attaque 11a et son bord de fuite 11b suivant une direction transversale D_{T}. Le profil aérodynamique 11 s'étend, suivant une direction longitudinale D_{L}, entre un bord inférieur 11c et un bord supérieur 11d. Le pied 12 s'étend suivant la direction transversale D_{T} sur une longueur inférieure à la longueur du bord inférieur 11c du profil aérodynamique 11.

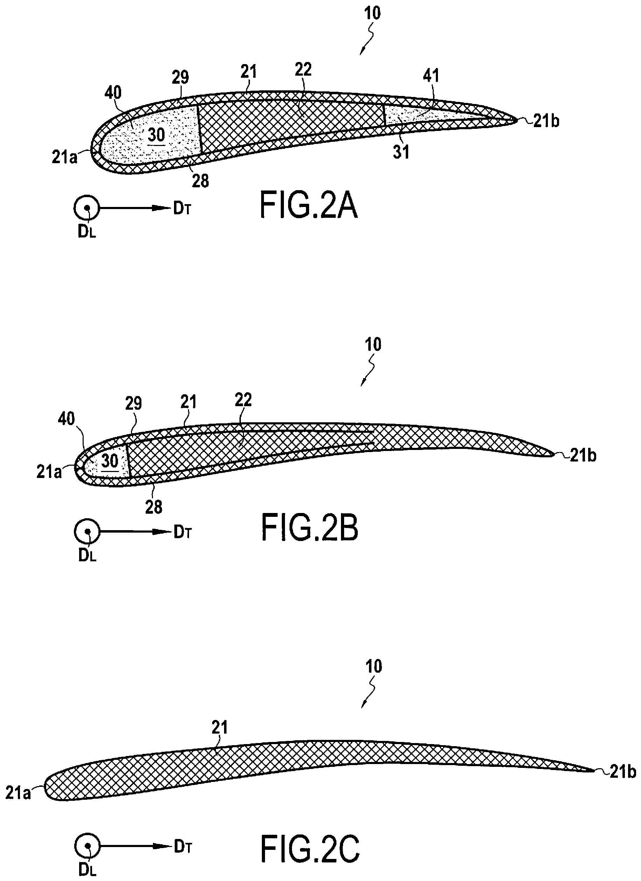

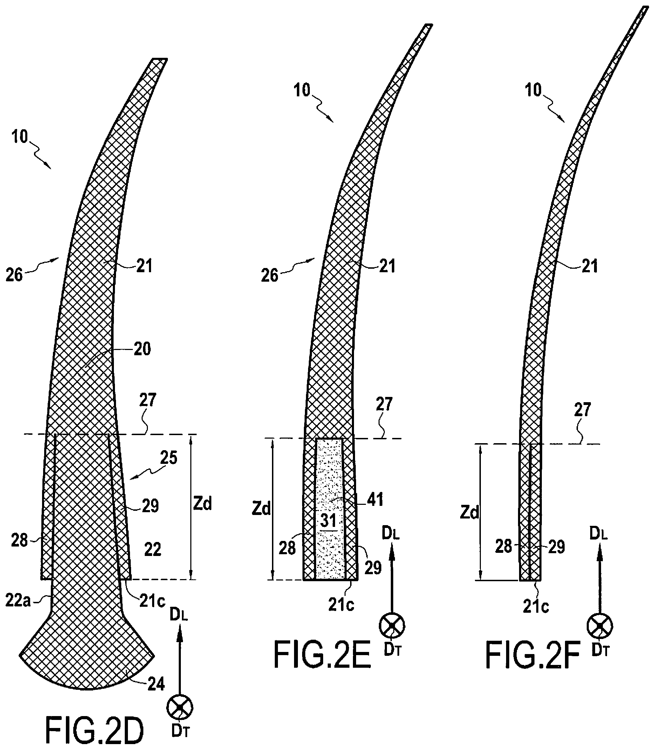

Comme représentée sur les figures 1 et 2A à 2F, l'aube 10 comprend un renfort fibreux 20 densifié par une matrice, le renfort fibreux 10 étant constitué d'une structure fibreuse selon l'invention dont la structure et la fabrication sont décrites ci-après. Comme illustré sur les figures 2A à 2F, le renfort fibreux 20 comprend en une seule pièce une structure à profil aérodynamique 21 destinée à former le profil aérodynamique de l'aube 10, une portion de longeron 22 s'étendant à l'intérieur de la structure à profil aérodynamique 21, une portion renflée 24 formant le pied d'aube 12 s'étendant dans le prolongement de la portion du longeron 22 à l'extérieur de la structure à profil aérodynamique 21, la partie 22a de la portion de longeron présente à l'extérieur de la structure à profil aérodynamique 21 et raccordant la portion renflée 24 formant l'échasse 13 de l'aube 10. Le renfort fibreux 20 comprend principalement des première et deuxième parties 25 et 26 séparées l'une l'autre par une zone intermédiaire 27. La première partie 25 délimite une zone de déliaison Z_{D} à l'intérieur de la structure profil aérodynamique 21, la zone de déliaison s'étendant entre la zone intermédiaire 27 et le bord inférieur 21c de la structure à profil aérodynamique 21 correspondant du bord inférieur 11c du profil aérodynamique 11 suivant la direction longitudinal D_{L} et entre les bords avant et arrière 21a et 21b de la structure à profil aérodynamique 21 correspondant respectivement au bord d'attaque 11a et au bord de fuite 11b du profil aérodynamique 11 suivant la direction transversale D_{T}. La première partie 25 comprend des première et deuxième peaux 28 et 29 déliées l'une par rapport à l'autre et déliées de la portion de longeron 22, les première et deuxième peaux 28 et 29 s'étendant entre les bords avant et arrière 21a et 21b de la structure à profil aérodynamique 21 suivant la direction transversale et entre la zone intermédiaire 27 et le bord inférieur 21c de la structure à profil aérodynamique 21 suivant la direction longitudinal, les peaux 28 et 29 enserrant la portion de longeron 22. Les première et deuxièmes peaux 28 et 29 délimitent à l'intérieur de la structure à profil aérodynamique 21 des premier et deuxième logements 30 et 31 présents respectivement d'un côté et de l'autre de la portion de longeron 22 suivant la direction transversale, les premier et deuxième logements 30 et 31 débouchant au niveau bord inférieur 21c de la structure à profil aérodynamique 21. Une première pièce de conformation 40 est présente dans le premier logement 30. De même, une deuxième pièce de conformation 41 est présente dans le deuxième logement 31.

Afin de conformer le renfort fibreux 20 sans augmenter significativement la masse globale de la structure à profil aérodynamique de la pale d'hélice, les pièces 40 et 41 sont de préférence en matériau rigide alvéolé, c'est-à-dire un matériau présentant une faible densité tel qu'une mousse rigide par exemple. Les pièces de conformation peuvent être réalisées par moulage ou par usinage dans un bloc de matériau.

Le procédé de fabrication d'une aube selon l'invention comprend la réalisation d'une structure fibreuse conformément à la présente invention.

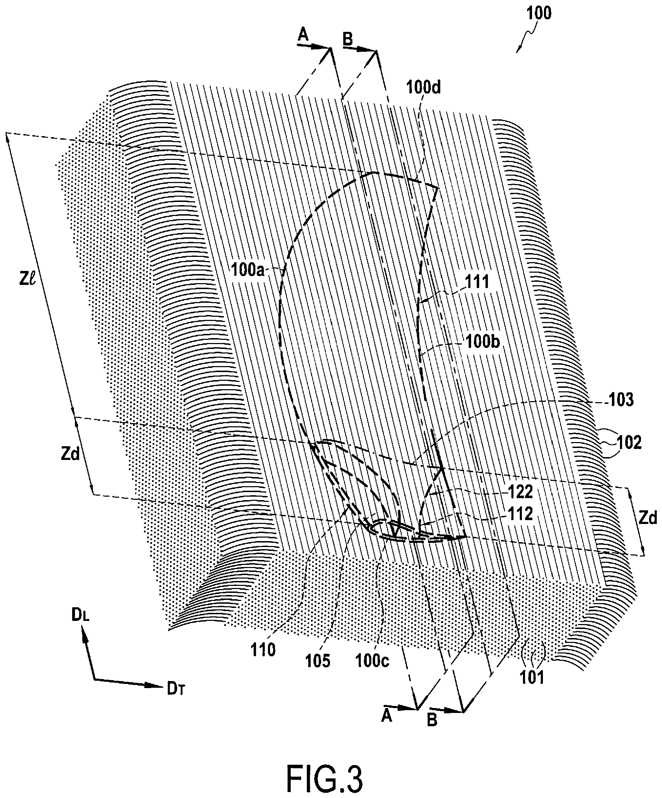

La figure 3 montre très schématiquement une ébauche de structure fibreuse 100 destinée à former la préforme fibreuse de l'aube à réaliser.

L'ébauche de structure fibreuse 100 est obtenue, comme illustrée schématiquement sur la figure 3, par tissage tridimensionnel (3D) réalisé de façon connue au moyen d'un métier à tisser de type jacquard sur lequel on a disposé un faisceau de fils de chaînes 101 ou torons en une pluralité de couches de plusieurs centaines de fils chacune, les fils de chaînes étant liés par des fils de trame 102. L'ébauche de structure fibreuse 100 est tissée en une seule pièce, l'ébauche s'étendant dans une direction longitudinale entre une partie inférieure 100c et une partie supérieure 100d et dans une direction transversale entre un bord avant 100a et un bord arrière 100b, l'ébauche comprenant une ébauche de profil aérodynamique 111, une ébauche de portion de longeron 122 et une ébauche de portion renflée 112, l'ébauche de portion de longeron 122 s'étendant à l'intérieur de l'ébauche de structure fibreuse 100 en retrait des bords avant et arrière 100a et 100b suivant la direction transversale D_{T} et, suivant la direction longitudinale D_{L}, entre une zone intermédiaire 103 située entre les parties inférieure et supérieure 100c et 100d de l'ébauche de structure fibreuse, l'ébauche de portion renflée 112 s'étendant dans le prolongement de l'ébauche de portion longeron 122.

Dans l'exemple illustré, le tissage 3D est un tissage à armure "interlock". Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure.

D'autres types de tissage tridimensionnel connus pourront être utilisés, comme notamment ceux décrits dans le document WO 2006/136755 dont le contenu est incorporé ici par voie de référence. Ce document décrit notamment la réalisation par tissage en une seule pièce de structures fibreuses de renfort pour des pièces telles que des aubes ayant un premier type d'armure à cœur et un deuxième type d'armure en peau qui permettent de conférer à la fois les propriétés mécaniques et aérodynamiques attendues pour ce type de pièce.

L'ébauche fibreuse selon l'invention peut être tissée notamment à partir de fils de fibres de carbone ou de céramique tel que du carbure de silicium.

Au fur et à mesure du tissage de l'ébauche fibreuse dont l'épaisseur et la largeur varient, un certain nombre de fils de chaîne ne sont pas tissés, ce qui permet de définir le contour et l'épaisseur voulue, continûment variable, de l'ébauche 100. Un exemple de tissage 3D évolutif permettant notamment de faire varier l'épaisseur de l'ébauche entre un premier bord destiné à former le bord d'attaque et un deuxième bord d'une épaisseur moindre et destiné à former le bord de fuite est décrit dans le document EP 1 526 285 dont le contenu est incorporé ici par référence.

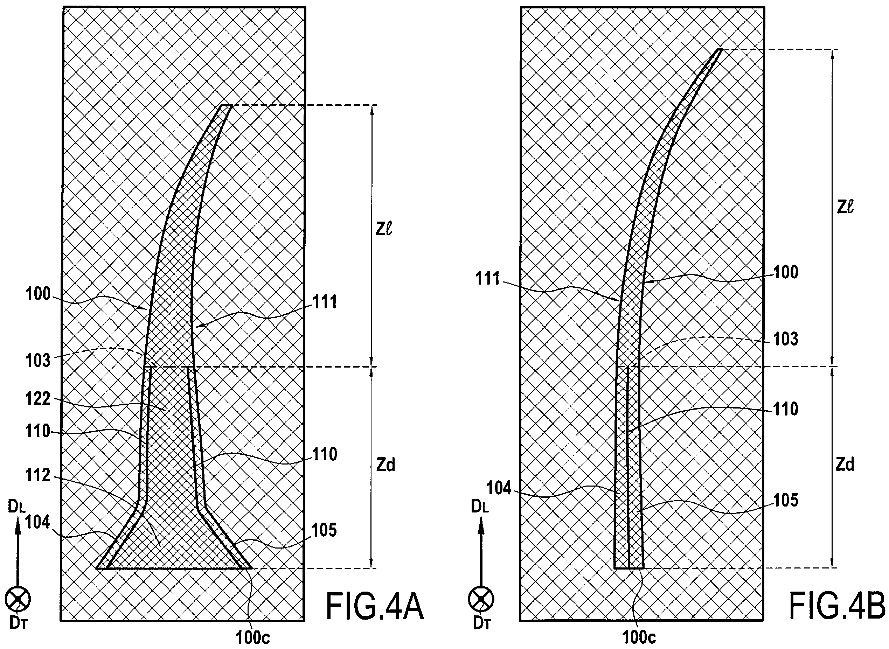

En outre, lors du tissage de l'ébauche fibreuse, une déliaison 110 est réalisée à l'intérieur de l'ébauche fibreuse entre des couches successives de fils de chaîne et sur une zone de déliaison Z_{d} séparant ladite zone de déliaison Z_{d} d'une zone de liaison Zₗ dans l'ébauche fibreuse. Plus précisément, comme illustrés sur les figures 4A et 4B, la déliaison 101 s'étend entre une zone intermédiaire 103 et le bord inférieur 100c de l'ébauche de structure fibreuse 100 suivant la direction longitudinal D_{L} et entre les bords avant et arrière 100a et 100b de l'ébauche de structure fibreuse 100 suivant la direction transversale D_{T}, la déliaison 110 séparant des première et deuxième portions présentes de part et d'autre de l'ébauche de portion de longeron 122 de manière à former des première et deuxième ébauches de peaux 104 et 105 déliées l'une par rapport à l'autre. Les première et deuxième ébauches peaux 104 et 105 s'étendent entre les bords avant et arrière 100a et 100b de l'ébauche de structure fibreuse 100 suivant la direction transversale D_{T} et entre la zone intermédiaire 103 et le bord inférieur 100c de l'ébauche de structure fibreuse suivant la direction longitudinal. Les ébauches de peaux 104 et 105 enserrent l'ébauche de portion de longeron 122 et l'ébauche de portion renflée 112. Les première et deuxièmes ébauches de peaux délimitent à l'intérieur de l'ébauche de structure fibreuse 100 des premier et deuxième logements 130 et 131 présents respectivement d'un côté et de l'autre de l'ébauche de portion de longeron 122 suivant la direction transversale D_{T}.

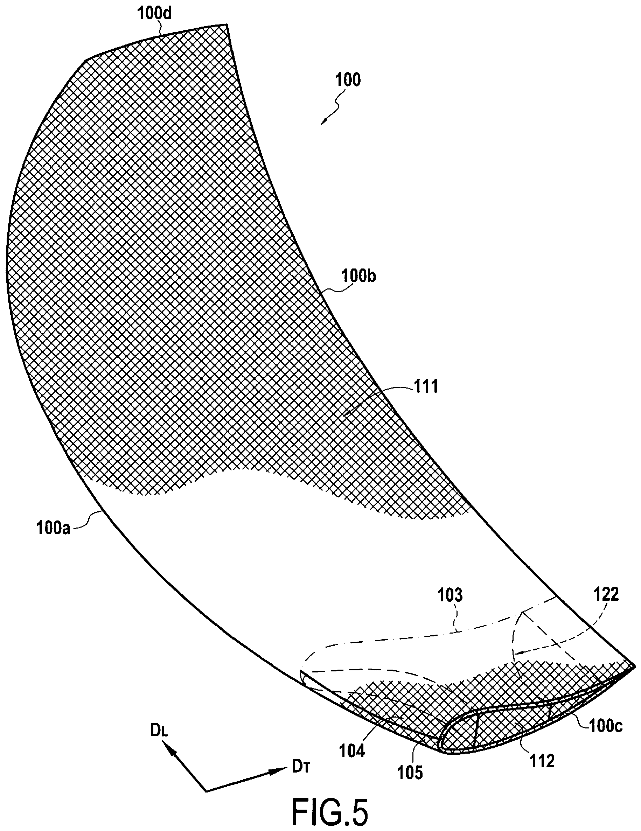

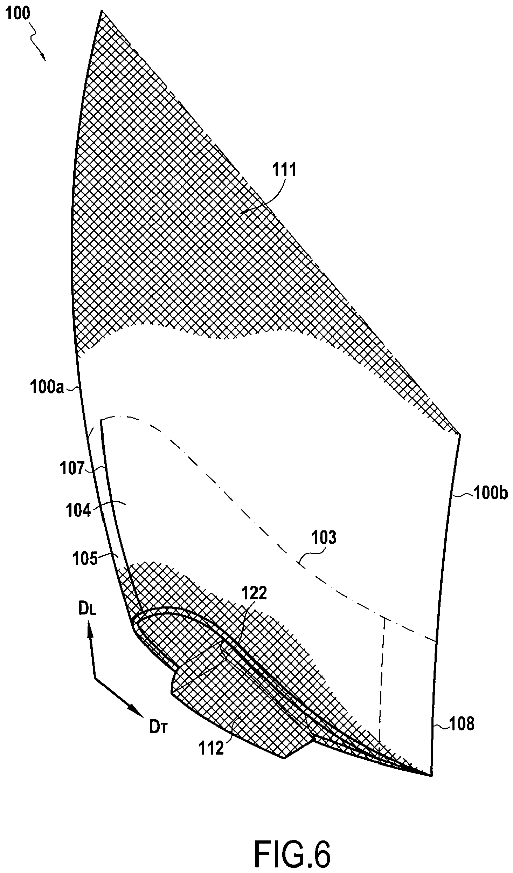

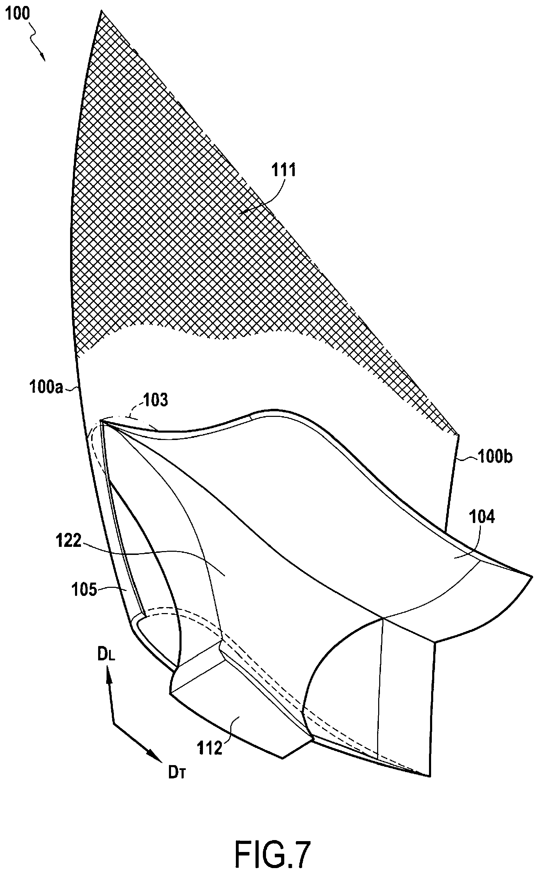

Une fois l'ébauche de structure fibreuse 100 tissé on procède à la découpe, par exemple au jet d'eau, des fils flottés présents à l'extérieur de la masse tissée de manière à définir le contour extérieur d'une structure fibreuse comme illustré sur la figure 5. On découpe aussi des fils flottés présents sur les ébauches de peaux 104 et 105 au niveau de la partie inférieure de l'ébauche de structure fibreuse de manière à dégager l'ébauche de portion renflée 112 destinée à former ultérieurement un pied d'aube ainsi qu'une partie de l'ébauche de portion de longeron 122 destinée à former ultérieurement une échasse d'aube comme représenté sur la figure 6. On procède également à la découpe des fils flottés présents autour de l'ébauche de portion de longeron 122 et de l'ébauche de portion renflée 112 en soulevant les ébauches de peaux 104 et 105 comme représenté sur la figure 7. A cet effet, des première et deuxième fentes 107 et 108 (figure 6) sont formées entre les ébauches de peaux 104 et 105 respectivement au niveau du bord avant 100a et du bord arrière 100b, les fentes 107 et 108 s'étendant dans la direction longitudinale D_{L}. Les fentes 107 et 108 peuvent être formées lors du tissage par déliaison au niveau des bords avant et arrière ou par découpe après tissage.

Les ébauches de peaux sont préférentiellement d'épaisseur constante. La dégressivité d'épaisseur de l'ébauche de profil aérodynamique suivant la hauteur est alors gérée au niveau de l'ébauche de portion de longeron. Les sorties de fils sont donc faites sous les ébauches de peaux qu'il est nécessaire de pouvoir soulever pour accéder à ces sorties de fils.

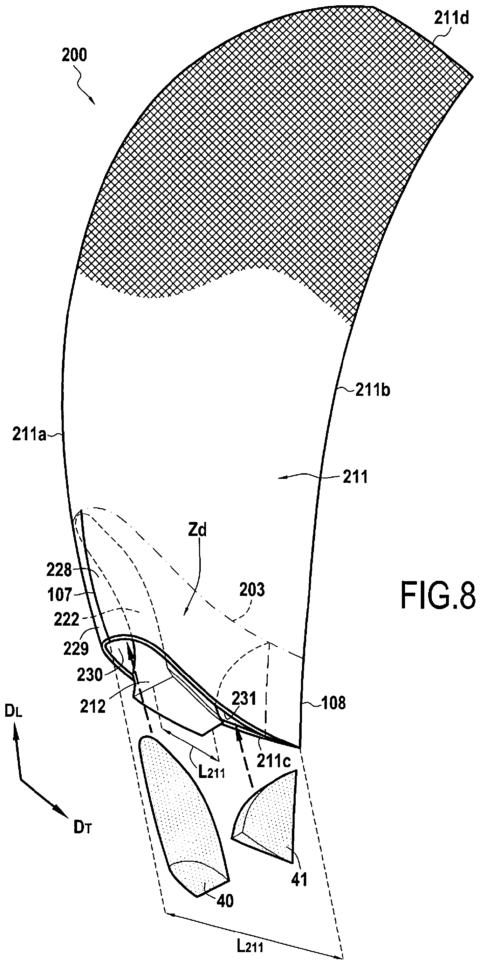

On obtient alors, comme illustrée sur la figure 8, une structure fibreuse 200 tissée en une seule pièce et ayant un profil aérodynamique 211, une portion de longeron 222 et une portion renflée 212, le profil aérodynamique 211 s'étendant dans la direction longitudinale D_{L} entre une extrémité inférieure 211c et une extrémité supérieure 211d et dans la direction transversale D_{T} entre un bord avant 211a et un bord arrière 211b. La structure fibreuse 200 comporte une zone de déliaison Z_{d} s'étendant entre les bords avant et arrière 211a et 211d du profil aérodynamique 211 suivant la direction transversale D_{L} et entre une partie intermédiaire 203 et le bord inférieur 211c du profil aérodynamique 211 suivant la direction longitudinal. La portion de longeron 222 s'étend à l'intérieur du profil aérodynamique 211 au niveau de la zone de déliaison Z_{d} en retrait des bords avant et arrière 211a et 211b suivant la direction transversale D_{T} et, suivant la direction longitudinale D_{L}, entre une partie intermédiaire 203 située entre les bords inférieur et supérieur 211c et 211d du profil aérodynamique 211 et le bord inférieur 211c dudit profil aérodynamique au niveau duquel la portion de longeron 222 débouche. La portion renflée 212 s'étend dans le prolongement de la portion de longeron 222 à l'extérieur du profil aérodynamique 211, la portion renflée 212 s'étendant suivant la direction transversale D_{T} sur une longueur L₂₁₂ inférieure à la longueur L₂₁₁ du bord inférieur 211c du profil aérodynamique. Le profil aérodynamique 211 comporte au niveau de la zone de déliaison Z_{d} des première et deuxième peaux 228 et 229 déliées l'une par rapport à l'autre, les première et deuxième peaux s'étendant entre les bords avant et arrière 211a et 211b du profil aérodynamique suivant la direction transversale D_{T} et entre la partie intermédiaire 203 et le bord inférieur 211c du profil aérodynamique suivant la direction longitudinal D_{L}, les peaux 228 et 229 enserrant la portion de longeron 222.

Les première et deuxièmes peaux 228 et 229 délimitent à l'intérieur du profil aérodynamique des premier et deuxième logements 230 et 231 présents respectivement d'un côté et de l'autre de la portion de longeron 222 suivant la direction transversale, les premier et deuxième logements 230 et 231 débouchant à l'extrémité inférieure du profil aérodynamique 211.

Sur la figure 8, la conformation de la structure fibreuse 200 en une préforme d'aube, est réalisée en introduisant dans les logements 230 et 231 respectivement les pièces de conformation 40 et 41.

Une fois les pièces de conformation 40 et 41 introduites dans les logements 230 et 231, on procède à la densification de la préforme fibreuse d'aube. Les fentes 107 et 108 présentes sur les bords avant et arrière 211a et 211b de la structure fibreuse sont de préférence refermées par couture avant la densification.

La densification de la préforme fibreuse consiste à combler la porosité de la préforme, dans tout ou partie du volume de celle-ci, par le matériau constitutif de la matrice.

La matrice du matériau composite peut être obtenue de façon connue en soi suivant le procédé par voie liquide.

Le procédé par voie liquide consiste à imprégner la préforme par une composition liquide contenant un précurseur organique du matériau de la matrice. Le précurseur organique se présente habituellement sous forme d'un polymère, tel qu'une résine, éventuellement dilué dans un solvant. La préforme est placée dans un moule pouvant être fermé de manière étanche avec un logement ayant la forme de la pièce finale moulée et pouvant notamment présenter une forme vrillée correspondant à la forme définitive de la pale. Ensuite, on referme le moule et on injecte le précurseur liquide de matrice (par exemple une résine) dans tout le logement pour imprégner toute la partie fibreuse de la préforme.

La transformation du précurseur en matrice organique, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de l'aube. La matrice organique peut être notamment obtenue à partir de résines époxydes, telle que la résine époxyde à hautes performances vendue sous la référence PR 520 par la société CYTEC, ou de précurseurs liquides de matrices carbone ou céramique.

Dans le cas de la formation d'une matrice carbone ou céramique, le traitement thermique consiste à pyrolyser le précurseur organique pour transformer la matrice organique en une matrice carbone ou céramique selon le précurseur utilisé et les conditions de pyrolyse. A titre d'exemple, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir au degré de densification souhaité.

Selon un aspect de l'invention, la densification de la préforme fibreuse peut être réalisée par le procédé bien connu de moulage par transfert dit RTM ("Resin Transfert Moulding"). Conformément au procédé RTM, on place la préforme fibreuse dans un moule présentant la forme extérieure de la pale. Une résine thermodurcissable est injectée dans l'espace interne délimité entre la pièce en matériau rigide et le moule et qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La résine utilisée peut être, par exemple, une résine époxyde. Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

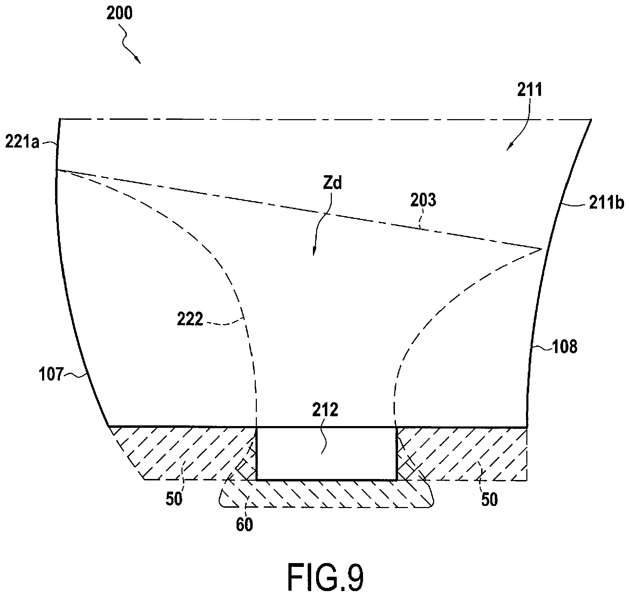

Après l'injection et la polymérisation, la pièce est démoulée. Comme illustrée sur la figure 9, on procède alors à un usinage de sur-longueurs 50 présentes au niveau de la partie inférieure des peaux et de sur-longueurs 60 présentes au niveau du pied et de l'échasse. L'usinage est réalisé de manière à ne pas introduire de rayons de raccordement entre le pied et l'échasse. Après l'usinage, la portion renflée formant le pied d'aube 12 est reliée à la portion de longeron via une échasse 13 présentant des bords latéraux 13a et 13b droits sensiblement parallèles à la direction longitudinale D_{L} (figure 1). On forme ainsi un pied broché raccourci sans introduire de rayons de raccordement entre le pied et le profil aérodynamique, ce qui améliore grandement la tenue mécanique de cette partie de l'aube. En effet, la zone de raccordement entre le pied et le profil aérodynamique est une zone de l'aube très sollicitée mécaniquement car elle concentre les contraintes mécaniques générées par la géométrie de l'aube en mouvement et correspond à une zone de localisation de la criticité vibratoire pouvant conduire à des décohésions entre les fibres et la matrice. Lorsqu'un rayon de raccordement est présent entre le profil aérodynamique et le pied, on doit être le plus grand possible mais cela implique alors d'augmenter la taille de l'échasse qui résulte en une augmentation de masse globale de l'aube ou de la pale d'hélice non souhaitable. En outre, la maîtrise de la géométrie du rayon de raccordement complique la fabrication de l'aube ou pale d'hélice.

Au final, la pièce est détourée pour enlever l'excès de résine et les chanfreins sont usinés. Aucun autre usinage n'est nécessaire puisque, la pièce étant moulée, elle respecte les cotes exigées. On obtient alors une aube en matériau composite 10 telle que représentée sur la figure 1.

Le matériau rigide alvéolé utilisé pour réaliser les pièces de conformation 40 et 41 est de préférence un matériau à alvéoles fermées de manière à empêcher la pénétration de la résine dans celui-ci et conserver, ainsi, sa faible densité après densification de la préforme fibreuse.

## Revendications

1. Structure fibreuse (200) de renfort d'aube ou pale d'hélice en matériau composite, la structure fibreuse (200) ayant un profil aérodynamique (211), une portion de longeron (222) et une portion renflée (212), le profil aérodynamique s'étendant dans une direction longitudinale (D_{L}) entre une extrémité inférieure (211c) et une extrémité supérieure (211d) et dans une direction transversale (D_{T}) entre un bord avant (211a) et un bord arrière (211b), la structure fibreuse (200) comportant une zone de déliaison (Z_{d}) s'étendant entre les bords avant et arrière (211a, 211b) du profil aérodynamique (211) suivant la direction transversale et entre une zone intermédiaire (203) et le bord inférieur (211c) dudit profil suivant la direction longitudinale, la portion de longeron (222) s'étendant à l'intérieur du profil aérodynamique (211) au niveau de la zone de déliaison (Z_{d}) en retrait des bords avant et arrière (211a, 211b) dudit profil suivant la direction transversale, la portion de longeron (222) débouchant à l'extérieur du profil aérodynamique au niveau du bord inférieur (211c) dudit profil, la portion renflée (212) s'étendant dans le prolongement de la portion de longeron (222) à l'extérieur du profil aérodynamique (211), la portion renflée (212) s'étendant suivant la direction transversale sur une longueur (L₂₁₂) inférieure à la longueur (L₂₁₁) du bord inférieur (211c) du profil aérodynamique, le profil aérodynamique (211) comportant au niveau de la zone de déliaison (Z_{d}) des première et deuxième peaux (228, 229) déliées l'une par rapport à l'autre, les première et deuxième peaux s'étendant entre les bords avant et arrière (211a, 211b) du profil aérodynamique (211) suivant la direction transversale et entre la zone intermédiaire (203) et le bord inférieur (211c) dudit profil suivant la direction longitudinale, les peaux (228, 229) enserrant la portion de longeron (222), les première et deuxièmes peaux délimitant à l'intérieur du profil aérodynamique (211) des premier et deuxième logements (230, 231) présents respectivement d'un côté et de l'autre de la portion de longeron suivant la direction transversale, les premier et deuxième logements (230, 231) débouchant au niveau du bord inférieur (211c) du profil aérodynamique (211),
la structure fibreuse étant **caractérisée en ce qu'**elle est tissée en une seule pièce.

2. Structure selon la revendication 1, dans laquelle le bord avant (211a) et le bord arrière (211b) présentent chacun une fente (107, 108) s'étendant suivant la direction longitudinale (D_{L}) entre la partie intermédiaire (203) et l'extrémité inférieure (211c) de la structure fibreuse.

3. Aube (10) ou pale d'hélice comprenant un renfort fibreux (20) constitué d'une structure fibreuse selon la revendication 1 ou 2 et densifié par une matrice, l'aube ou pale d'hélice comportant un profil aérodynamique (11), une portion de longeron (22) s'étendant à l'intérieur du profil aérodynamique, une échasse (13) s'étendant à l'extérieur du profil aérodynamique (11), un pied (12) s'étendant à l'extérieur du profil aérodynamique dans le prolongement de l'échasse, une première pièce de conformation (40) présente dans le premier logement (30) ménagé à l'intérieur du profil aérodynamique et une deuxième pièce de conformation (41) présente dans le deuxième logement (31) ménagé à l'intérieur du profil aérodynamique.

4. Aube ou pale d'hélice selon la revendication 3, dans laquelle l'échasse (13) reliant le pied à la portion de longeron présente des bords latéraux (13a, 13b) droits parallèles à la direction longitudinale (D_{L}).

5. Aube ou pale d'hélice selon la revendication 3 ou 4, dans laquelle la hauteur de la zone de déliaison (Z_{d}) présente dans la structure fibreuse (200) constituant le renfort fibreux de l'aube ou pale d'hélice est comprise entre 10% et 50% de la hauteur totale (H₁₁) du profil aérodynamique (11) suivant la direction longitudinale (D_{L}).

6. Moteur aéronautique comprenant une pluralité d'aubes ou pales d'hélice selon l'une quelconque des revendications 3 à 5.

7. Aéronef comprenant au moins un moteur selon la revendication 6.

8. Procédé de fabrication d'une structure fibreuse de renfort d'aube (10) ou pale d'hélice en matériau composite comprenant :
- le tissage tridimensionnel entre une pluralité de couches de fils de trame (102) et une pluralité de couches de fils chaîne (101) d'une ébauche de structure fibreuse (100) en une seule pièce, l'ébauche s'étendant dans une direction longitudinale (D_{L}) entre une partie inférieure (100c) et une partie supérieure (100d) et dans une direction transversale (D_{T}) entre un bord avant (100a) et un bord arrière (100d), l'ébauche (100) comprenant une ébauche de profil aérodynamique (111), une ébauche de portion de longeron (122) et une ébauche de portion renflée (112), le procédé comprenant lors du tissage de l'ébauche de structure fibreuse (100) la formation d'une déliaison (110) à l'intérieur de l'ébauche de profil aérodynamique (111), la déliaison (110) s'étendant entre une zone intermédiaire (103) et le bord inférieur (100c) de l'ébauche de structure fibreuse (100) suivant la direction longitudinal et entre les bords avant et arrière (100a, 100b) de l'ébauche de structure fibreuse suivant la direction transversale, la déliaison (110) séparant des première et deuxième portions présentes de part et d'autre de l'ébauche de portion de longeron (122) de manière à former des première et deuxième ébauches de peaux (104, 105) déliées l'une par rapport à l'autre, les première et deuxième ébauches de peaux (104, 105) s'étendant entre les bords avant et arrière (100a, 100b) de l'ébauche de structure fibreuse suivant la direction transversale et entre la zone intermédiaire (103) et le bord inférieur (100c) de l'ébauche de structure fibreuse (100) suivant la direction longitudinal, les ébauches de peaux enserrant l'ébauche de portion de longeron (122), les première et deuxième ébauches peaux (104, 105) délimitant à l'intérieur de l'ébauche de structure fibreuse (100) des premier et deuxième logements (130, 131) présents respectivement d'un côté et de l'autre de l'ébauche de portion de longeron (122) suivant la direction transversale, les premier et deuxième logements (130, 131) débouchant au niveau de la partie inférieure (100c) de l'ébauche de structure fibreuse,
- la découpe de fils flottés présents à l'extérieur de l'ébauche de structure fibreuse (100) de manière à définir le contour extérieur de la structure fibreuse,
- la découpe de fils flottés présents autour de l'ébauche de portion de longeron (122) et de l'ébauche de portion renflée (112) ainsi que de fils flottés présents au niveau de la partie inférieure de l'ébauche de structure fibreuse de manière à obtenir une structure fibreuse (200) comportant un profil aérodynamique (211) comprenant un bord inférieur (211c) à partir duquel une portion renflée (212) s'étend dans le prolongement d'une portion de longeron (222) à l'extérieur du profil aérodynamique, la portion renflée (212) s'étendant suivant la direction transversale (D_{T}) sur une longueur (L₂₁₂) inférieure à la longueur (L₂₁₁) du bord inférieur (211c) du profil aérodynamique.

9. Procédé de fabrication d'une aube (10) ou pale d'hélice en matériau composite comprenant au moins:
- la réalisation d'une structure fibreuse (200) conformément au procédé selon la revendication 8,
- la mise en forme de la structure fibreuse (200) par introduction dans les premier et deuxième logements (230, 231) présents à l'intérieur du profil aérodynamique (211) de la structure fibreuse respectivement d'une première et d'une deuxième pièces de conformation (40, 41) pour obtenir une préforme d'aube ou de pale d'hélice,
- la densification de la préforme par une matrice,
- l'usinage de sur-longueurs (50, 60) présentes sur la préforme densifiée pour obtenir une aube (10) ou pale d'hélice comportant un profil aérodynamique (11), une portion de longeron (22) s'étendant à l'intérieur du profil aérodynamique, une échasse (13) s'étendant à l'extérieur du profil aérodynamique, un pied (12) s'étendant à l'extérieur du profil aérodynamique (11) dans le prolongement de l'échasse (13), une première pièce de conformation (40) présente dans le premier logement (30) ménagé à l'intérieur du profil et une deuxième pièce de conformation (41) présente dans le deuxième logement (31) ménagé à l'intérieur du profil aérodynamique (11).

10. Procédé de fabrication d'une aube ou pale d'hélice en matériau composite selon la revendication 9, dans laquelle l'échasse (13) reliant le pied à la portion de longeron présente des bords latéraux (13a, 13b) droits parallèles à la direction longitudinale (D_{L}).

11. Procédé de fabrication d'une aube ou pale d'hélice selon la revendication 9 ou 10, dans laquelle la hauteur de la zone de déliaison (Z_{d}) présente dans la structure fibreuse (200) constituant le renfort fibreux de l'aube ou pale d'hélice est comprise entre 10% et 50% de la hauteur totale (H₁₁) du profil aérodynamique (11) suivant la direction longitudinale (D_{L}).

## Patentansprüche

1. Faserstruktur (200) zur Verstärkung einer/eines Propellerschaufel oder -blattes aus Verbundwerkstoff, wobei die Faserstruktur (200) ein aerodynamisches Profil (211), einen Längsträgerabschnitt (222) und einen gewölbten Abschnitt (212) aufweist, wobei sich das aerodynamische Profil in einer Längsrichtung (D_{L}) zwischen einem unteren Ende (211c) und einem oberen Ende (211d) sowie in einer Querrichtung (D_{T}) zwischen einer Vorderkante (211a) und einer Hinterkante (211b) erstreckt, wobei die Faserstruktur (200) einen Lösebereich (Z_{d}) aufweist, der sich zwischen der Vorder- und der Hinterkante (211a, 211b) des aerodynamischen Profils (211) in der Querrichtung sowie zwischen einem Zwischenbereich (203) und der Unterkante (211c) des Profils in der Längsrichtung erstreckt, wobei sich der Längsträgerabschnitt (222) innerhalb des aerodynamischen Profils (211) im Bereich des Lösebereiches (Z_{d}) von der Vorder- und der Hinterkante (211a, 211b) des Profils in der Querrichtung zurückgesetzt erstreckt, wobei der Längsträgerabschnitt (222) im Bereich der Unterkante (211c) des Profils außerhalb des aerodynamischen Profils ausmündet, wobei sich der gewölbte Abschnitt (212) in der Verlängerung des Längsträgerabschnitts (222) außerhalb des aerodynamischen Profils (211) erstreckt, wobei sich der gewölbte Abschnitt (212) in der Querrichtung über eine Länge (L212) erstreckt, die geringer als die Länge (L211) der Unterkante (211c) des aerodynamischen Profils ist, wobei das aerodynamische Profil (211) im Bereich des Lösebereichs (Z_{d}) eine erste und eine zweite Haut (228, 229) umfasst, die zueinander gelöst sind, wobei sich die erste und die zweite Haut zwischen der Vorder- und der Hinterkante (211a, 211b) des aerodynamischen Profils (211) in der Querrichtung sowie zwischen dem Zwischenbereich (203) und der Unterkante (211c) des Profils in der Längsrichtung erstrecken, wobei die Häute (228, 229) den Längsträgerabschnitt (222) umschließen, wobei die erste und die zweite Haut innerhalb des aerodynamischen Profils (211) eine erste und eine zweite Aufnahme (230, 231) begrenzen, die auf einer bzw. auf der anderen Seite des Längsträgerabschnitts in der Querrichtung vorhanden sind, wobei die erste und die zweite Aufnahme (230, 231) im Bereich der Unterkante (211c) des aerodynamischen Profils (211) ausmünden, wobei die Faserstruktur **dadurch gekennzeichnet ist, dass** sie einstückig gewebt ist.

2. Struktur nach Anspruch 1, bei der die Vorderkante (211a) und die Hinterkante (211b) jeweils einen Schlitz (107, 108) aufweisen, der sich in der Längsrichtung (D_{L}) zwischen dem Zwischenteil (203) und dem unteren Ende (211c) der Faserstruktur erstreckt.

3. Schaufel (10) oder Blatt eines Propellers, umfassend eine Faserverstärkung (20), die aus einer Faserstruktur nach Anspruch 1 oder 2 besteht und durch eine Matrix verdichtet ist, wobei die/das Propellerschaufel oder -blatt ein aerodynamisches Profil (11), einen Längsträgerabschnitt (22), der sich innerhalb des aerodynamisches Profils (11) erstreckt, eine Stelze (13), die sich außerhalb des aerodynamisches Profils (11) erstreckt, einen Fuß (12), der sich außerhalb des aerodynamischen Profils in der Verlängerung der Stelze erstreckt, ein erstes Formgebungsteil (40), das in der ersten Aufnahme (30), welche innerhalb des aerodynamischen Profils ausgebildet ist, vorhanden ist, sowie ein zweites Formgebungsteil (41) umfasst, das in der zweiten Aufnahme (31), welche innerhalb des aerodynamischen Profils ausgebildet ist, vorhanden ist.

4. Propellerschaufel oder -blatt nach Anspruch 3, bei der/dem die Stelze (13), welche den Fuß mit dem Längsträgerabschnitt verbindet, gerade Seitenkanten (13a, 13b), die parallel zur Längsrichtung (D_{L}) verlaufen, aufweist.

5. Propellerschaufel oder -blatt nach Anspruch 3 oder 4, bei der/dem die Höhe des Lösebereichs (Z_{d}), welcher in der Faserstruktur (200), die die Faserverstärkung der/des Propellerschaufel- oder -blattes bildet, vorhanden ist, zwischen 10 % und 50 % der Gesamthöhe (H₁₁) des aerodynamischen Profils (11) in der Längsrichtung (D_{L}) beträgt.

6. Flugzeugtriebwerk, das eine Vielzahl von Propellerschaufeln oder -blättern nach einem der Ansprüche 3 bis 5 umfasst.

7. Luftfahrzeug, das wenigstens ein Triebwerk nach Anspruch 6 umfasst.

8. Verfahren zur Herstellung einer Faserstruktur zur Verstärkung einer/eines Propellerschaufel (10) oder -blattes aus Verbundwerkstoff, umfassend:
- das dreidimensionale Weben zwischen einer Vielzahl von Schussfadenlagen (102) und einer Vielzahl von Kettfadenlagen (101) eines einstückigen Faserstrukturrohlings (100), wobei sich der Rohling in einer Längsrichtung (D_{L}) zwischen einem unteren Teil (100c) und einem oberen Teil (100d) sowie in einer Querrichtung (D_{T}) zwischen einer Vorderkante (100a) und einer Hinterkante (100d) erstreckt, wobei der Rohling (100) einen Rohling eines aerodynamischen Profils (111), einen Rohling eines Längsträgerabschnitts (122) und einen Rohling eines gewölbten Abschnitts (112) umfasst, wobei das Verfahren während des Webens des Faserstrukturrohlings (100) das Ausbilden einer Losbindung (110) innerhalb des aerodynamischen Profil-Rohlings (111) umfasst, wobei sich die Losbindung (110) zwischen einem Zwischenbereich (103) und der Unterkante (100c) des Faserstrukturrohlings (100) in der Längsrichtung sowie zwischen der Vorder- und der Hinterkante (100a, 100b) des Faserstrukturrohlings in der Querrichtung erstreckt, wobei die Losbindung (110) einen ersten und einen zweiten Abschnitt trennt, die auf beiden Seiten des Längsträgerabschnitt-Rohlings (122) vorhanden sind, um einen ersten und einen zweiten Haut-Rohling (104, 105) zu bilden, die zueinander gelöst sind, wobei sich der erste und der zweite Haut-Rohling (104, 105) zwischen der Vorder- und der Hinterkante (100a, 100b) des Faserstrukturrohlings in der Querrichtung sowie zwischen dem Zwischenbereich (103) und der Unterkante (100c) des Faserstrukturrohlings (100) in der Längsrichtung erstrecken, wobei die Haut-Rohlinge den Längsträgerabschnitt-Rohling (122) umschließen, wobei der erste und der zweite Haut-Rohling (104, 105) innerhalb des Faserstruktur-Rohlings (100) eine erste und eine zweite Aufnahme (130, 131) begrenzen, die auf einer Seite bzw. auf der anderen Seite des Längsträgerabschnitt-Rohlings (122) in der Querrichtung vorhanden sind, wobei die erste und die zweite Aufnahme (130, 131) im Bereich des unteren Teils (100c) des Faserstrukturrohlings ausmünden,
- das Schneiden von außerhalb des Faserstrukturrohlings (100) vorhandenen Flottierfäden, um die Außenkontur der Faserstruktur zu definieren,
- das Schneiden von Flottierfäden, die um den Längsträgerabschnitt-Rohling (122) und den gewölbten Abschnitt-Rohling (112) vorhanden sind, sowie von Flottierfäden, die im Bereich des unteren Teils des Faserstrukturrohlings vorhanden sind, um eine Faserstruktur (200) zu erhalten, die ein aerodynamisches Profil (211) mit einer Unterkante (211c) umfasst, von der ausgehend sich ein gewölbter Abschnitt (212) in der Verlängerung eines Längsträgerabschnitts (222) außerhalb des aerodynamischen Profils erstreckt, wobei sich der gewölbte Abschnitt (212) in der Querrichtung (D_{T}) über eine Länge (L₂₁₂) erstreckt, die geringer als die Länge (L₂₁₁) der Unterkante (211c) des aerodynamischen Profils ist.

9. Verfahren zur Herstellung einer/eines Propellerschaufel (10) oder -blattes aus Verbundwerkstoff, wenigstens umfassend:
- die Herstellung einer Faserstruktur (200) gemäß dem Verfahren nach Anspruch 8,
- das Informbringen der Faserstruktur (200) durch Einführen jeweils eines ersten und eines zweiten Formgebungsteils (40, 41) in die erste und die zweite Aufnahme (230, 231), welche innerhalb des aerodynamischen Profils (211) der Faserstruktur vorhanden sind, um einen Propellerschaufel- oder -blatt-Vorformling zu erhalten,
- das Verdichten des Vorformlings durch eine Matrix,
- das Bearbeiten von Überlängen (50, 60), die an dem verdichteten Vorformling vorhanden sind, um ein(e) Schaufel (10) oder Blatt eines Propellers zu erhalten, umfassend ein aerodynamisches Profil (11), einen Längsträgerabschnitt (22), der sich innerhalb des aerodynamischen Profils erstreckt, eine Stelze (13), die sich außerhalb des aerodynamischen Profils erstreckt, einen Fuß (12), der sich außerhalb des aerodynamischen Profils (11) in der Verlängerung der Stelze (13) erstreckt, ein erstes Formgebungsteil (40), das in der ersten Aufnahme (30), welche innerhalb des Profils ausgebildet ist, vorhanden ist, sowie ein zweites Formgebungsteil (41), das in der zweiten Aufnahme (31), welche innerhalb des aerodynamischen Profils (11) ausgebildet ist, vorhanden ist.

10. Verfahren zur Herstellung einer Schaufel oder eines Blattes eines Propellers aus Verbundwerkstoff nach Anspruch 9, bei der/dem die Stelze (13), welche den Fuß mit dem Längsträgerabschnitt verbindet, gerade Seitenkanten (13a, 13b), die parallel zur Längsrichtung (D_{L}) verlaufen, aufweist.

11. Verfahren zur Herstellung einer Schaufel oder eines Blattes eines Propellers nach Anspruch 9 oder 10, bei der/dem die Höhe des Lösebereichs (Z_{d}), welcher in der Faserstruktur (200), die die Faserverstärkung der/des Propellerschaufel- oder -blattes bildet, vorhanden ist, zwischen 10 % und 50 % der Gesamthöhe (H₁₁) des aerodynamischen Profils (11) in der Längsrichtung (D_{L}) beträgt.

## Claims

1. A fiber reinforcing structure (200) for a propeller blade made of composite material, the fiber structure (200) having an airfoil (211), a spar portion (222), and an enlarged portion (212), the airfoil extending in a longitudinal direction (D_{L}) between a bottom end (211c) and a top end (211d) and extending in a transverse direction (D_{T}) between a front edge (211a) and a rear end (211b), the fiber structure (200) including a zone (Z_{d}) of non-interlinking between the front and rear edges (211a, 211b) of the airfoil (211) in the transverse direction, and extending between an intermediate zone (203) and the bottom edge (211c) of said airfoil in the longitudinal direction, the spar portion (222) extending inside the airfoil (211) in the zone (Z_{d}) of non-interlinking, being set back from the front and rear edges (211a, 211b) of said airfoil in the transverse direction, the spar portion (222) leading to the outside of the airfoil in the bottom edge (211c) of said airfoil, the enlarged portion (212) extending from the spar portion (222) outside the airfoil (211), the enlarged portion (212) extending in the transverse direction over a length (L₂₁₂) that is shorter than the length (L₂₁₁) of the bottom edge (211c) of the airfoil, the airfoil (211) having first and second skins (228, 229) in the zone (Z_{d}) of non-interlinking that are not interlinked with each other, the first and second skins extending between the front and rear edges (211a, 211b) of the airfoil (211) in the transverse direction, and extending between the intermediate zone (203) and the bottom edge (211c) of said airfoil in the longitudinal direction, the skins (228, 229) surrounding the spar portion (222), the first and second skins defining first and second housings (230, 231) inside the airfoil (211), which housings are present on respective sides of the spar portion in the transverse direction, the first and second housings (230, 231) opening out through the bottom edge (211c) of the airfoil (211), said fiber structure being **characterized in that** it is woven as a single piece.

2. A structure according to claim 1, wherein the front edge (211a) and the rear edge (211b) present respective slots (107, 108) extending in the longitudinal direction (D_{L}) between the intermediate portion (203) and the bottom end (211c) of the fiber structure.

3. A propeller blade (10) comprising fiber reinforcement (20) constituted by a fiber structure according to claim 1 or claim 2 and densified by a matrix, the propeller blade comprising an airfoil (11), a spar portion (22) extending inside the airfoil, a tang (13) extending outside the airfoil (11), a root (12) extending outside the airfoil from the tang, a first shaper part (40) present in the first housing (30) provided inside the airfoil, and a second shaper part (41) present in the second housing (31) provided inside the airfoil.

4. A propeller blade according to claim 3, wherein the tang (13) connecting the root to the spar portion presents side edges (13a, 13b) that are straight and parallel to the longitudinal direction (D_{L}).

5. A propeller blade according to claim 3 or claim 4, wherein the height of the zone (Z_{d}) of non-interlinking present in the fiber structure (200) constituting the fiber reinforcement of the propeller blade lies in the range 10% to 50% of the total height (H₁₁) of the airfoil (11) in the longitudinal direction (D_{L}).

6. An aeroengine including a plurality of propeller blades according to any one of claims 3 to 5.

7. An aircraft including at least one aeroengine according to claim 6.

8. A method of fabricating a reinforcing fiber structure for a propeller blade (10) out of composite material, the method comprising:
- three-dimensionally weaving a fiber structure blank (100) as a single piece between a plurality of layers of weft yarns (102) and a plurality of layers of warp yarns (101), the blank extending in a longitudinal direction (D_{L}) between a bottom portion (100c) and a top portion (100d), and extending in a transverse direction (D_{T}) between a front edge (100a) and a rear edge (100d), the blank (100) comprising an airfoil blank (111), a spar portion blank (122), and an enlarged portion blank (112), the method comprising, during weaving of the fiber structure blank (100), forming non-interlinking (110) inside the airfoil blank (111), the non-interlinking (110) extending between an intermediate zone (103) and the bottom edge (100c) of the fiber structure blank (100) in the longitudinal direction, and extending between the front and rear edges (100a, 100b) of the fiber structure blank in the transverse direction, the non-interlinking (110) separating first and second portions present on either side of the spar portion blank (122) so as to form first and second skin portion blanks (104, 105) that are not interlinked with each other, the first and second skin blanks (104, 105) extending between the front and rear edges (100a, 100b) of the fiber structure blank in the transverse direction, and extending between the intermediate zone (103) and the bottom edge (100c) of the fiber structure blank (100) in the longitudinal direction, the skin blanks surrounding the spar portion blank (122), the first and second skin blanks (104, 105) defining first and second housings (130, 131) inside the fiber structure blank (100), the housings being present on respective sides of the spar portion blank (122) in the transverse direction, the first and second housings (130, 131) opening out through the bottom portion (100c) of the fiber structure blank;
- cutting off floated yarns present at the outside of the fiber structure blank (100) so as to define the outline of the fiber structure; and
- cutting off floated yarns present around the spar portion blank (122) and around the enlarged portion blank (112) and also floated yarns present at the bottom portion of the fiber structure blank so as to obtain a fiber structure (200) comprising an airfoil (211) having a bottom edge (211c) from which an enlarged portion (212) extends from a spar portion (222) outside the airfoil, the enlarged portion (212) extending in the transverse direction (D_{T}) over a length (L₂₁₂) shorter than the length (L₂₁₁) of the bottom edge (211c) of the airfoil.

9. A method of fabricating a propeller blade (10) out of composite material, the method comprising at least:
- making a fiber structure (200) in accordance with the method of claim 8;
- shaping the fiber structure (200) by inserting first and second shaper parts (40, 41) respectively into the first and second housings (230, 231) present inside the airfoil (211) of the fiber structure in order to obtain a propeller blade preform;
- densifying the preform with a matrix; and
- machining away excess lengths (50, 60) present on the densified preform in order to obtain a propeller blade (10) having an airfoil (11), a spar portion (22) extending inside the airfoil, a tang (13) extending outside the airfoil, a root (12) extending outside the airfoil (11) from the tang (13), a first shaper part (40) present in the first housing (30) formed inside the airfoil, and a second shaper part (41) present in the second housing (31) formed inside the airfoil (11).

10. A method according to claim 9, for fabricating a propeller blade out of composite material, wherein the tang (13) connecting the root to the spar portion presents side edges (13a, 13b) that are straight and parallel to the longitudinal direction (D_{L}).

11. A method according to claim 9 or claim 10, for fabricating a propeller blade, wherein the height of the zone (Z_{d}) of non-interlinking present in the fiber structure (200) constituting the fiber reinforcement of the propeller blade lies in the range 10% to 50% of the total height (H₁₁) of the airfoil (11) in the longitudinal direction (D_{L}).
